# EUROPEAN PATENT APPLICATION

(11) **EP 3 835 216 A1**
(43) Date of publication of application: **16.06.2021**
(21) Application number: 20213555.4
(22) Date of filing: 11.12.2020
(51) Int. Cl.: B64D 37/32, B01D 63/02

(54) **AIR SEPARATION MODULES, NITROGEN GENERATION SYSTEMS, AND METHODS OF MAKING AIR SEPARATION MODULES**

(30) Priority: 11.12.2019 US 201916710795
(71) Applicant: Hamilton Sundstrand Corporation, Charlotte, NC 28217-4578 (US)
(72) Inventor: DOHERTY, James R., Feeding Hills, MA 01030 (US); WOLDEMARIAM, Beakal T., South Windsor, CT 06074 (US); ANDERSON, David, Enfield, CT 06082 (US); ARMY, Donald E., Enfield, CT 06082 (US); SURAWSKI, Eric, Hebron, CT 06248 (US)
(74) Representative: Dehns

(57) **Abstract**

An air separation module includes canister (126), a separator (122), and a band (128). The canister has an inlet end, an axially opposite outlet end, and an oxygen-enriched air flow fraction outlet port between the inlet end and the outlet end of the canister. The separator is supported within the canister and is arranged to separate compressed air flow into an oxygen-depleted air flow fraction and an oxygen-enriched air flow, provide the oxygen-depleted air flow fraction to the outlet end of the canister, and divert the oxygen-enriched air flow fraction to the oxygen-enriched air flow outlet port. The band is fixed to the canister and extends about the separator at a location axially between the oxygen-enriched air flow fraction outlet port and the inlet end of the canister to support the air separation module. Nitrogen generation systems and methods of making air separation modules are also described.

## Description

### BACKGROUND

The present disclosure generally relates to nitrogen generation systems, and more particularly to air separation modules for generating oxygen-depleted air in nitrogen generating systems.

Vehicles, such as aircraft, commonly carry liquid fuel in fuel tanks. Fuel tanks typically have an ullage space occupied by a mixture of fuel vapors and ambient air. Such fuel vapor-air mixtures are potentially hazardous when concentration of oxygen is sufficient to support combustion. To limit (or eliminate entirely) the combustion risk posed by such fuel vapor-air mixtures some vehicles employ inerting systems to control oxygen concentration with the vehicle fuel tank. Examples of inerting systems include nitrogen generation systems with air separation modules. The air separation modules in such inerting system can be employed to communicate oxygen-depleted air flows to the vehicle fuel tank to limit oxygen concentration within the fuel tank ullage space.

Air separation modules typically separate pressurized air into an oxygen-depleted fraction and an oxygen-enriched fraction. The oxygen-depleted air flow is generally communicated to the vehicle fuel tank, wherein the oxygen-depleted air flow limits concentration of oxygen within the fuel tank. The oxygen-enriched air flow is typically diverted to the external environment. The oxygen-depleted air flow generation capacity of the air separation module is typically limited by external support structure and/or framing employed to structurally support the air separation module.

Such systems and methods have generally been acceptable for their intended purpose. However, there remains a need for improved air separation modules, nitrogen generation systems, and methods of making air separation modules for nitrogen generation systems.

### BRIEF DESCRIPTION

An air separation module is provided. The air separation module includes canister, a separator, and a band. The canister has an inlet end, an axially opposite outlet end, and an oxygen-enriched air flow fraction outlet port between the inlet end and the outlet end of the canister. The separator is supported within the canister and is arranged to separate compressed air flow into an oxygen-depleted air flow fraction and an oxygen-enriched air flow, provide the oxygen-depleted air flow fraction to the outlet end of the canister, and divert the oxygen-enriched air flow fraction to the oxygen-enriched air flow outlet port. The band is fixed to the canister and extends about the separator at a location axially between the oxygen-enriched air flow fraction outlet port and the inlet end of the canister to support the air separation module.

In addition to one or more of the features described above, or as an alternative, further examples of the air separation module may include that the band and the canister are formed as a one-piece canister body.

In addition to one or more of the features described above, or as an alternative, further examples of the air separation module may include that the band is fastened to the canister.

In addition to one or more of the features described above, or as an alternative, further examples of the air separation module may include that the band is welded or bonded to the canister.

In addition to one or more of the features described above, or as an alternative, further examples of the air separation module may include that the canister has a canister inlet flange and an axially opposite canister outlet flange, the band evenly spaced between the canister inlet flange and the canister outlet flange.

In addition to one or more of the features described above, or as an alternative, further examples of the air separation module may include a supply conduit fluidly coupled to the outlet end of the canister, the supply conduit supported by the canister.

In addition to one or more of the features described above, or as an alternative, further examples of the air separation module may include the band has a standoff and that the supply conduit is supported by the standoff.

In addition to one or more of the features described above, or as an alternative, further examples of the air separation module may include a band member extending about the canister axially between the oxygen-enriched air outlet and the band, the band member supporting the supply conduit.

In addition to one or more of the features described above, or as an alternative, further examples of the air separation module may include a canister fixation feature connected to the band and arranged for fixation of the air separation module to a vehicle structure.

In addition to one or more of the features described above, or as an alternative, further examples of the air separation module may include a one-piece inlet cap connected to the inlet end of the canister and having an inlet end fixation feature, the inlet end fixation feature arranged for fixation of the air separation module to a vehicle.

In addition to one or more of the features described above, or as an alternative, further examples of the air separation module may include a one-piece outlet cap connected to the outlet end of the canister and having an outlet end fixation feature, the outlet end fixation feature arranged for fixation of the air separation module to a vehicle.

In addition to one or more of the features described above, or as an alternative, further examples of the air separation module may include the canister fixation feature includes a clevis structure arranged to seat therein a tie rod.

In addition to one or more of the features described above, or as an alternative, further examples of the air separation module may include a compressed air source fluidly coupled to the inlet end of the canister and fluidly coupled to the outlet end of the canister by the separator.

In addition to one or more of the features described above, or as an alternative, further examples of the air separation module may include a fuel tank fluidly coupled to the outlet end of the canister and fluidly coupled to the inlet end of the canister by the separator.

In addition to one or more of the features described above, or as an alternative, further examples of the air separation module may include that the inlet cap has a one-piece inlet cap body, the one-piece inlet cap body and inlet end fixation feature being homogenous in composition and monolithic in construction.

In addition to one or more of the features described above, or as an alternative, further examples of the air separation module may include that the outlet cap has a one-piece outlet cap body, the one-piece outlet cap body and inlet end fixation feature being homogenous in composition and monolithic in construction.

A nitrogen generation system is also provided. The nitrogen generation system includes an air separation module described above. The canister has a canister inlet flange and an axially opposite second flange and the band is evenly spaced between the canister inlet flange and the second flange. A compressed air source fluidly is coupled to the inlet end of the canister and is in turn fluidly coupled to the outlet end of the canister by the separator. A fuel tank fluidly is coupled to the outlet end of the canister and fluidly coupled to the inlet end of the canister by the separator.

In addition to one or more of the features described above, or as an alternative, further examples of the nitrogen generator may include a canister fixation feature fixed to the band and arranged for fixation of the air separation module to a vehicle structure; a one-piece inlet cap connected fixed to the inlet end of the canister and having an inlet end fixation feature, the inlet end fixation feature arranged for fixation of the air separation module to a vehicle structure; and a one-piece outlet cap connected fixed to the outlet end of the canister and having an outlet end fixation feature, the outlet end fixation feature arranged for fixation of the air separation module to a vehicle structure.

In addition to one or more of the features described above, or as an alternative, further examples of the nitrogen generation system may include that the band and the canister are formed as a one-piece canister body, and further comprising a canister fixation feature fixed to the band and arranged for fixation of the air separation module to a vehicle structure.

A method is additionally provided. The method includes defining a canister having an inlet end, an axially opposite outlet end, and an oxygen-enriched air outlet port between the inlet end and the outlet end of the canister; supporting a separator within the canister to separate a compressed air flow into the oxygen-depleted air flow fraction and the oxygen-enriched air flow, provide the oxygen-depleted air flow fraction to the outlet end of the canister, and divert the oxygen-enriched air flow fraction to the oxygen-enriched air flow outlet port; and fixing a band to the canister, wherein the band extends about the canister at a location axially between the oxygen-enriched air outlet and the outlet end of the canister to strengthen the canister and support the air separation module.

In addition to one or more of the features described above, or as an alternative, further examples of the method may include connecting a one-piece inlet cap to the inlet end of the canister, the one-piece inlet cap having an inlet end fixation feature for fixation of the air separation module to a vehicle structure; connecting a one-piece outlet cap to the outlet end of the canister, the one-piece outlet cap having an outlet end fixation feature for fixation of the air separation module to a vehicle structure; and connecting a canister fixation feature to a band, the canister fixation feature arranged for fixation of the air separation module to a vehicle structure.

In addition to one or more of the features described above, or as an alternative, further examples may include connecting a standoff to the band, supporting a supply conduit with the standoff, and fluidly connecting the supply conduit to the oxygen-depleted air outlet of the canister.

Technical effects of the present disclosure include air separation modules having relatively large oxygen-depleted air flow generating capacity (inerting capability) relative to space occupied by the air separation module. In certain examples air separation modules described herein include strengthened canisters, limiting (or eliminating entirely) the need for framing. In accordance with certain examples, air separation modules described herein include a band extending about the canister and having canister fixation features, the band stiffening the canister and allowing the band to at least in part transfer the load of the air separation module to vehicle structure.

### BRIEF DESCRIPTION OF THE DRAWINGS

The following descriptions should not be considered limiting in any way. With reference to the accompanying drawings, like elements are numbered alike:
FIG. 1 is a schematic view of an air separation module constructed in accordance with the present disclosure, showing a nitrogen generation system including the air separation module carried by an aircraft and providing an oxygen-depleted air flow to a fuel tank;
FIG. 2 is a perspective view of the air separation module of FIG. 1 according to an example, showing a canister with a band connecting an inlet cap to an outlet cap of the air separation module;
FIGS. 3A-3D are a partial perspective view and partial cross-sectional views of the air separation module of FIG. 1 according to the example, showing a band extending about the canister of the air separation module; and
FIG. 4 is a block diagram of a method of making an air separation module, showing operations of the method according to an illustrative and nonlimiting example of the method.

### DETAILED DESCRIPTION

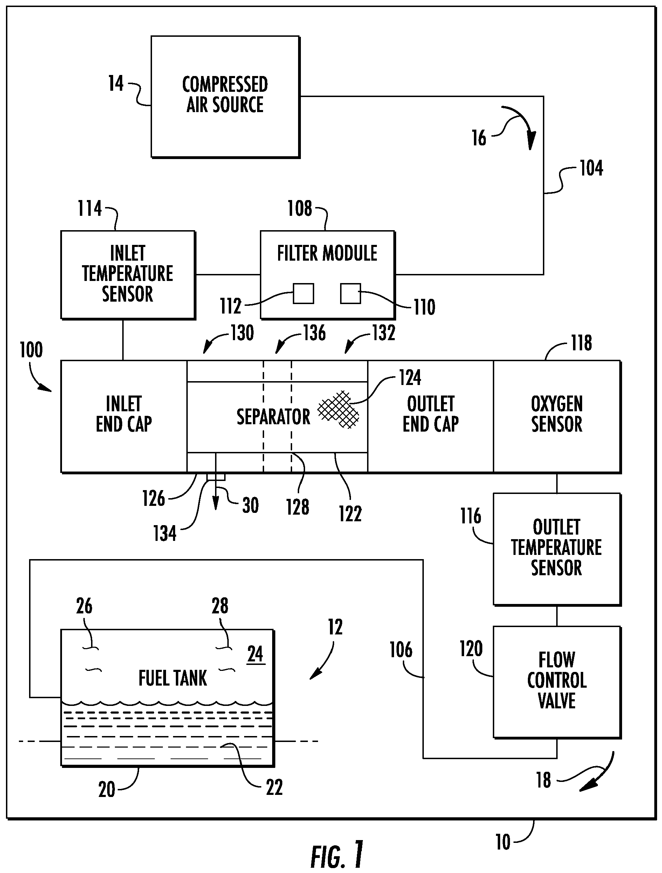

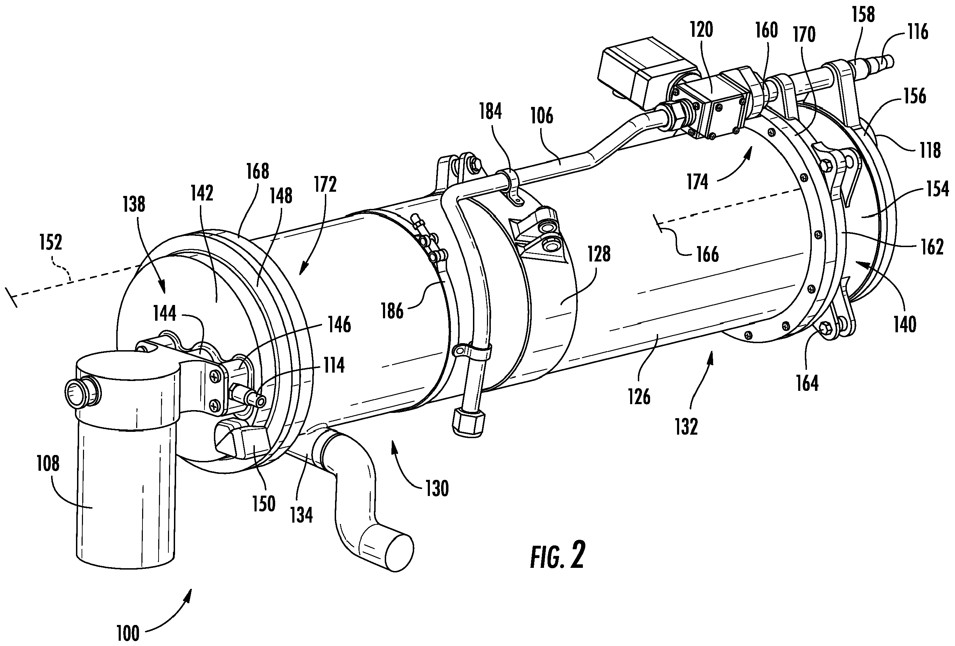

Reference will now be made to the drawings wherein like reference numerals identify similar structural features or aspects of the subject disclosure. For purposes of explanation and illustration, and not limitation, a partial view of an example of an air separation module constructed in accordance with the disclosure is shown in FIG. 1 and is designated generally by reference character 100. Other examples of air separation modules, nitrogen generation systems, and methods of making air separation modules, are provided in FIGS. 2-4, as will be described. The systems and methods described herein can be used for generating oxygen-depleted air flows for inerting fuel tanks, such as fuel tanks carried by aircraft, though the present disclosure is not limited to inerting fuel tanks on aircraft or to fuel systems in general.

Referring to FIG. 1, a vehicle 10, e.g., an aircraft is shown. The vehicle 10 includes a fuel system 12, a compressed air source 14, and a nitrogen generation system 102. The nitrogen generation system 102 includes the air separation module 100, a source conduit 104, and a supply conduit 106. The source conduit 104 fluidly connects the compressed air source 14 to the air separation module 100 to communicate a compressed air flow 16 to the air separation module 100. The air separation module 100 is configured to separate an oxygen-depleted air flow fraction 18 from the compressed air flow 16. The supply conduit 106 fluidly connects the air separation module 100 to the fuel system 12 to provide thereto the oxygen-depleted air flow fraction 18, e.g., a nitrogen-enriched air flow fraction. In certain examples the nitrogen generation system 102 is an onboard inert gas generation system (OBIGGS) for an aircraft.

The fuel system 12 includes a fuel tank 20. The fuel tank 20 is fluidly coupled to the air separation module 100 by the supply conduit 106 and contains within its interior a liquid fuel 22. The liquid fuel 22 and the interior of the fuel tank 20 define between one another an ullage space 24. The ullage space 24 harbors an atmosphere with a mixture including a fuel vapor 26 and nitrogen 28. The fuel vapor 26 is combustible in the presence of oxygen in concentration above a combustion threshold. The nitrogen 28 is provided by the oxygen-depleted air flow fraction 18 and is maintained in concentration sufficient to maintain concentration of oxygen with the ullage space below the combustion threshold of the fuel vapor 26. Limiting oxygen concentration limits (or prevents entirely) possibility of combustion of the fuel vapor 26 in the event that an ignition source comes into communication with the fuel vapor 26.

The compressed air source 14 is configured to provide the compressed air flow 16 (or pressurized air flow) using air ingested from the external environment 32. In certain examples the compressed air source 14 includes an engine, such as the compressor section of gas turbine engine carried by an aircraft. In accordance with certain examples the compressed air source 14 includes an external compressed air source, such as a ground support equipment cart or facility compressed air source.

The nitrogen generation system 102 includes the air separation module 100, a filter module 108 containing a debris filter 110 and an ozone converter 112, and an inlet temperature sensor 114. The nitrogen generation system 102 also includes an outlet temperature sensor 116, an oxygen sensor 118, and a flow control valve 120.

The filter module 108 fluidly couples the source conduit 104 to the inlet temperature sensor 114 to communicate thereto the compressed air flow 16. The debris filter 110 is configured to impound debris entrained within the compressed air flow 16 to prevent the debris from reaching and/or reducing reliability of air separation module 100. The ozone converter 112 is also to convert ozone molecules included within the compressed air flow 16 into dioxygen molecules, preventing the entrained ozone molecules from reaching the air separation module 100. As will be appreciated by those of skill in the art in view of the present disclosure, entrained debris and/or ozone can limit the reliability of the air separation module 100.

The inlet temperature sensor 114 is configured to measure temperature of the compressed air flow 16 provided to the air separation module 100 and fluidly couples the filter module 108 to the air separation module 100. In this respect the inlet temperature sensor 114 receives the compressed air flow 16 from the supply conduit 104 via the filter module 108 and communicates the compressed air flow 16 to the air separation module 100 subsequent to filtering and ozone conversion. In certain examples the inlet temperature sensor 114 is disposed in communication with a controller, which adjusts temperature of the compressed air flow 16 to maintain the compressed air flow 16 within a predetermined inlet temperature range.

The air separation module 100 includes a separator 122. The separator 122 is configured to separate the compressed air flow 16 into the oxygen-depleted air flow fraction 18 and an oxygen-enriched air flow fraction 30. The oxygen-enriched air flow fraction 30 is diverted from the fuel system 12 by the air separation module 100, e.g., is dumped overboard. The oxygen-depleted air flow fraction 18 is communicated by the air separation module 100 to the fuel system 12 via the outlet temperature sensor 116, the oxygen sensor 118, and the flow control valve 120. In certain examples the separator 122 includes a hollow fiber mat 124 configured to separate the compressed air flow 16 into the oxygen-depleted air flow fraction 18 and the oxygen-enriched air flow fraction 30. Examples of suitable hollow fiber mats include PEEK-Sep™ hollow fiber mats, available from Air Liquide Advanced Separations of Woburn, Massachusetts.

The outlet temperature sensor 116 is configured to measure temperature of the oxygen-depleted air flow fraction 18 prior to the oxygen-depleted air flow fraction 18 reaching the fuel system 12. In this respect the outlet temperature sensor 116 fluidly couples the air separation module 100, and therein the separator 122, to the oxygen sensor 118 to measure temperature of the oxygen-depleted air flow fraction 18. It is contemplated the outlet temperature sensor 116 provide a signal to a controller indicative of temperature of the oxygen-depleted air flow fraction 18, the controller thereby able to control of the oxygen-depleted air flow fraction 18 communicated to the fuel system 12.

The oxygen sensor 118 is configured to measure concentration of oxygen within the oxygen-depleted air flow fraction 18 prior to the oxygen-depleted air flow fraction 18 reaching the fuel system 12. In this respect the oxygen sensor 118 fluidly couples the outlet temperature sensor 116 to the flow control valve 120, and therethrough to the supply conduit 106, to measure oxygen concentration within the oxygen-depleted air flow fraction 18 received from the separator 122 as the oxygen-depleted air flow fraction 18 traverses the air separation module 100. It is contemplated that the oxygen sensor 118 provide a signal to a controller indicative of oxygen concentration within the oxygen-depleted air flow fraction 18, the controller thereby able to monitor performance of the air separation module 100.

The flow control valve 120 is configured to control flow rate, e.g., mass flow rate, of the oxygen-depleted air flow fraction 18 to the supply conduit 106. In this respect the flow control valve 120 fluidly couples the oxygen sensor 118 to the supply conduit 106 throttle flow of the oxygen-depleted air flow fraction 18 to the fuel system 12. It is contemplated that the flow control valve 120 be operatively associated with a controller to throttle the flow rate of the oxygen-depleted air flow fraction 18 according to the inerting requirements of the fuel system 12 and/or according to the operating requirements of the vehicle 10.

As will be appreciated by those of skill in the art in view of the present disclosure, the inerting capability provided by air separation modules generally corresponds to the weight and size of the air separation module. To limit weight and size per unit inerting capability the air separation module 100 is provided.

The air separation module 100 generally includes the separator 122, a canister 126, and a band 128 (e.g., a doubler). The canister 126 has an inlet end 130, an axially opposite outlet end 132, and an oxygen-enriched air flow fraction outlet port 134 between the inlet end 130 and the outlet end 132 of the canister 126. The separator 122 supported within the canister 126 and is arranged to separate compressed air flow 16 into the oxygen-depleted air flow fraction 18 and the oxygen-enriched air flow fraction 30, provide the oxygen-depleted air flow fraction 18 to the outlet end 132 of the canister 126, and divert the oxygen-enriched air flow fraction 30 to the oxygen-enriched air flow fraction outlet port 134. The band 128 is fixed to the canister 126 and extends about the separator 122 at a location 136 longitudinally, e.g., axially relative a direction of flow through the canister 126, between the oxygen-enriched air flow fraction outlet port 134 and the inlet end 130 of the canister 126 to support the air separation module 100.

With reference to FIG. 2, the air separation module 100 is shown according to an example. The air separation module 100 includes the canister 126, an inlet cap 138 (e.g., an inlet end cap), and an outlet cap 140 (e.g., an outlet end cap). The inlet cap 138 has a one-piece inlet cap body 142 with a filter module mount 144, an inlet temperature sensor mount 146, an inlet end flange 148, and an inlet end fixation feature 150. The filter module mount 144 seats thereon the filter module 108 and fluidly couples the filter module 108 therethrough to the inlet end 130 of the canister 126. The inlet temperature sensor mount 146 seats thereon the inlet temperature sensor 114 and fluidly couples the inlet temperature sensor 114 to the inlet end 130 of the canister 126. The inlet end flange 148 extends about the inlet cap 138 and receives therethrough a plurality of inlet cap fasteners 152, which rigidly fix the inlet cap 138 to the inlet end 130 of the canister 126. It is contemplated that inlet cap 138 fluidly coupled the source conduit 104 to the canister 126 to communicate thereto the compressed air flow 16 (shown in FIG. 1).

The inlet cap 138 has a one-piece inlet cap body 142. As used in herein the term "one-piece" means that various portions, e.g., mounting feature, flange, and/or mount, of the associated "one-piece" element are homogenous in composition and monolithic in construction. For example, it is contemplated that the inlet cap 138 be homogenous in composition and monolithic in construction, e.g., as formed using an investment casting technique, an additive manufacturing technique, or machined from a common piece of stock. As will be appreciated by those of skill in the art in view of the present disclosure, other manufacturing techniques and/or combinations of the aforementioned techniques are possible and are within the scope of the present disclosure.

The outlet cap 140 has a one-piece outlet cap body 154. The one-piece outlet cap body 154 has an oxygen sensor mount 156, an outlet temperature sensor mount 158, and a flow control valve mount 160. The one-piece outlet cap body 154 also has an outlet cap flange 162 and an outlet end fixation feature 164. The oxygen sensor mount 156 seats thereon the oxygen sensor 118 and fluidly couples the outlet end 132 of the canister 126 to the oxygen sensor 118. The outlet temperature sensor mount 158 seats thereon the outlet temperature sensor 116 and fluidly couples the oxygen sensor 118 to the outlet temperature sensor 116. The flow control valve mount 160 seats thereon the flow control valve 120 and fluidly couples the outlet temperature sensor 116 to the flow control valve 120, and therethrough to the supply conduit 106. The outlet cap flange 162 extends about the outlet cap 140 and receives therethrough a plurality of outlet cap fasteners 166, which rigidly fix the outlet cap 140 to the outlet end 132 of the canister 126.

The canister 126 defines the oxygen-enriched air flow fraction outlet port 134 and has a canister inlet flange 168 and a canister outlet flange 170. The canister inlet flange 168 extends about the inlet end 130 of the canister 126 and defines therein a canister inlet flange fastener pattern 172. The canister inlet flange fastener pattern 172 receives therein the plurality of inlet cap fasteners 152 for rigid fixation of the inlet cap 138 to inlet end 130 of the canister 126 at the canister inlet flange 168. The canister outlet flange 170 is similar to the canister inlet flange 168 and additionally extends about the outlet end 132 of the canister 126, defines therein a canister outlet fastener pattern 174, and receives therein the plurality of outlet cap fasteners 166 for rigid fixation of the outlet cap 140 to the outlet end 132 of the canister 126 at the canister outlet flange 170.

The compressed air source 14 (shown in FIG. 1) is fluidly coupled to the inlet end 130 of the canister 126 and is fluidly coupled to the outlet end 132 of the canister 126 by the separator 122 to communicate thereto the compressed air flow 16 (shown in FIG. 1). The fuel tank 20 (shown in FIG. 1) is fluidly coupled to the outlet end 132 of the canister 126 and is fluidly coupled to the inlet end 130 of the canister 126 by the separator 122 to receive therefrom the oxygen-depleted air flow fraction 18 (shown in FIG. 1).

The band 128 is arranged longitudinally between the canister inlet flange 168 and the canister outlet flange 170. In certain examples the double 128 is equally spaced between the canister inlet flange 168 and the canister outlet flange 170. In accordance with certain examples the band 128 can be arranged longitudinally between the oxygen-enriched air flow fraction outlet port 134 and the canister outlet flange 170, which allows to canister 126 to be positioned in an inclined orientation relative to gravity when the vehicle 10 (shown in FIG. 1) is straight and level flight such that the oxygen-enriched air flow fraction 30 (shown in FIG. 1) flushes condensate from within the canister 126.

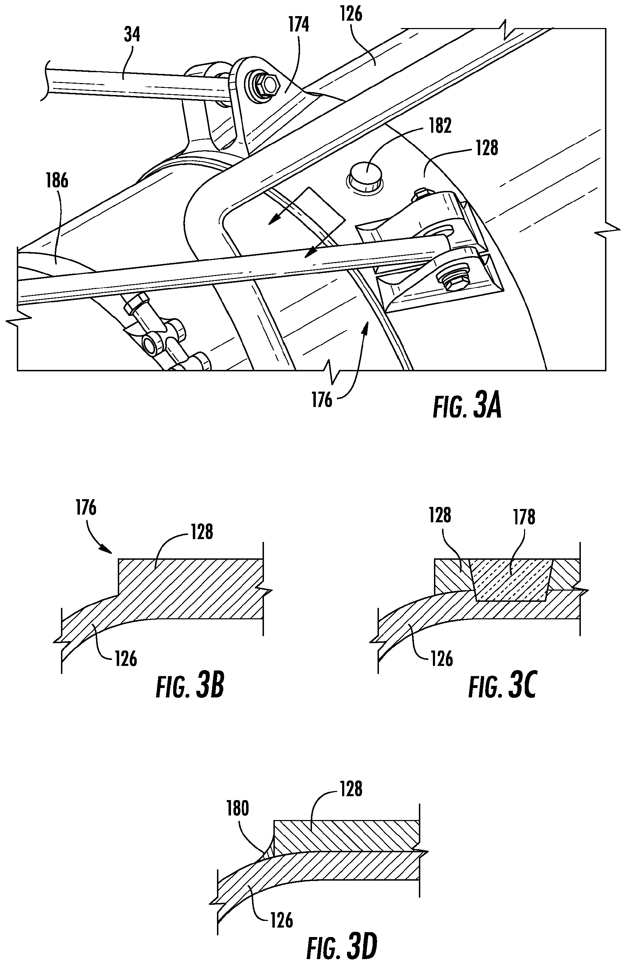

With reference to FIGS. 3A-3D, a portion of the air separation module 100 is shown including the canister 126 and the band 128. The band 128 extends circumferentially about the exterior of the canister 126 and includes a canister fixation feature 174. More specifically, the band 128 extends circumferentially about the canister 126 at a location between the canister inlet flange 168 (shown in FIG. 2) and the canister outlet flange 170 (shown in FIG. 2). In certain examples the band 128 is evenly spaced between the canister inlet flange 168 and the canister outlet flange 170.

As shown in FIG. 3B, in certain examples the band 128 and the canister 126 are formed as a one-piece canister body 176. Forming the canister 126 and the band 128 as a one-piece canister body 176 increases strength of the canister 126, allowing the canister 126 to support itself without an external frame and/or to fix the air separation module 100 to vehicle structure through the canister 126. As shown in FIG. 3C, in accordance with certain examples, the band 128 is fixed to the canister with one or more canister fastener 178. Fastening the band 128 to the canister 126 simplifies fabricating the air separation module 100 allows the band 128 to support the air separation module 100. As shown in FIG. 3D, it is also contemplated that the band 128 can be fixed to the canister 126 with a weld or bond 180. Welding or bonding the band 128 to the canister 126 simplifies fabrication of the air separation module 100 while allowing the band to both provide strength to the canister 126 and support the air separation module 100.

The canister fixation feature 174 is configured for fixation of the air separation module 100 to the vehicle 10 (shown in FIG. 1). More specifically, the canister fixation feature 174 is configured to support the air separation module 100 in the vehicle 10 through the canister 126, limiting size and/or weight of the air separation module 100 by limiting (or eliminating entirely) the need for additional structure to support the air separation module 100. In certain examples the canister fixation feature 174 is coupled to the canister 126 by the band 128. In accordance with certain examples canister fixation feature 174 extends laterally from the band 128. It is contemplated that, in accordance with certain examples, the canister fixation feature 174 can include one or more clevis 180 to seat therein a tie rod 34 for fixation of the air separation module 100 to the vehicle 10.

In certain examples the band 128 includes a standoff 182. The standoff 182 is coupled to the canister 126 by the band 128, extends laterally from the band 128, and is arranged to support the supply conduit 106 (shown in FIG. 1). In the illustrated example the standoff 182 seats therein a bracket 184 (shown in FIG. 2). The bracket 184 is fastened to the standoff 182, seats therein the supply conduit 106, and is supported therethrough by the canister 126.

In accordance with certain examples the air separation module 100 includes a band member 186. The band member 186 extends about the canister 126 at a location between the band 128 and the oxygen-enriched air flow fraction outlet port 134 of the canister 126, and seats thereon the supply conduit 106. This allows the canister 126 to support the supply conduit 106 while conforming the supply conduit 106 to the fuel system 12 (shown in FIG. 1) carried by the vehicle 10 (shown in FIG. 1).

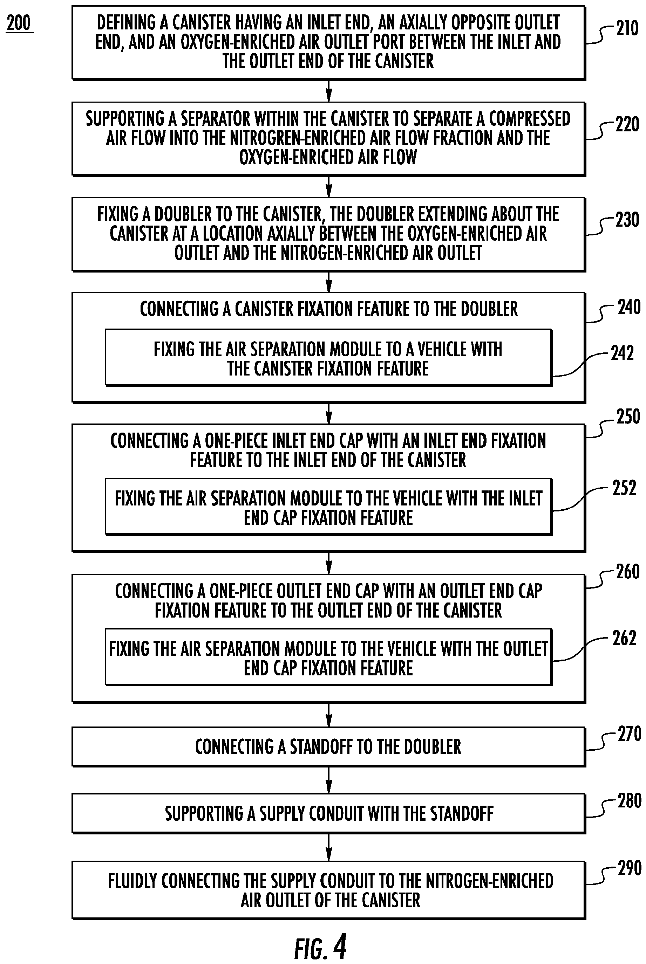

With reference to FIG. 4, a method 200 of making an air separation module, e.g., the air separation module 100 (shown in FIG. 1), is shown. As shown with box 210, the method 200 includes defining a canister, e.g., the canister 126 (shown in FIG. 1), having an inlet end, an axially opposite outlet end, and an oxygen-enriched air flow fraction outlet port between the inlet end and the outlet end of the canister. As shown with box 220, the method 200 also includes supporting a separator, e.g., the separator 122 (shown in FIG. 1), within the canister to separate a compressed air flow into the oxygen-depleted air flow fraction and the oxygen-enriched air flow. As shown with box 230, the method 200 additionally includes fixing a band to the canister, e.g., the band 128 (shown in FIG. 1), the band extending about the canister at a location axially between the oxygen-enriched air outlet and the outlet end of the canister to strengthen the canister and support the air separation module.

As shown with box 240, the method 200 includes connecting a canister fixation feature for fixation of the canister to a vehicle, e.g., the canister fixation feature 174 (shown in FIG. 2), to the band. A one-piece inlet cap having an inlet cap fixation feature for fixation of the inlet cap to the vehicle, e.g., the inlet cap 138 (shown in FIG. 2), is connected to the to the inlet end of the canister, as shown with box 250. A one-piece outlet cap having an outlet cap fixation feature for fixation of the outlet cap to the vehicle, e.g., the outlet cap 140 (shown in FIG. 2), is fixed to the outlet end of the canister, as shown with box 260. Connection can be with fasteners, e.g., the plurality of inlet cap fasteners 152 (shown in FIG. 2) and/or the plurality of outlet cap fasteners 166 (shown in FIG. 2), the fasteners rigidly fixing the inlet cap and the outlet cap to the canister.

It is contemplated that the air separation module be supported in a vehicle, e.g., the vehicle 10, with the fixation structures and without an intervening bracket or frame. In this respect it is contemplated that the air separation module be fixed to the vehicle with the canister fixation feature, as shown with box 242. It is also contemplated that that the air separation module be fixed to the vehicle with the inlet cap fixation feature and the outlet cap fixation feature, as shown with box 252 and box 262.

In certain examples the method 200 can include connecting a standoff to the band, e.g., the standoff 182 (shown in FIG. 2), as shown with box 270. A supply conduit, e.g., the supply conduit 106 (shown in FIG. 1), can supported by the standoff, as shown with box 280. The supply conduit is fluidly connected to the outlet end of the canister by the outlet cap to receive therefrom an oxygen-depleted air flow fraction from the canister, e.g., the oxygen-depleted air flow fraction 18 (shown in FIG. 1), as shown with box 290.

Fuel tanks, such as fuel tanks used to store liquid fuel in vehicles like aircraft, commonly contain fuel vapors within the ullage space of the fuel tank. Because such fuel vapors can present a fire hazard some vehicles include nitrogen generation systems with air separation modules. The air separation module is typically arranged to provide a flow of oxygen-depleted air to the fuel tank ullage space, limiting concentration of oxygen within the fuel tank ullage space and reducing (or eliminating entirely) the fire hazard potentially posed by the fuel vapors. The volume of nitrogen enriched air is generally constrained by the size of the air separation module and space allocated to the air separation module within the vehicle.

In examples provided herein air separation modules are provided having a band fixed to the canister of the air separation module. The band is arranged between the inlet end and the outlet end of the canister, e.g., equally spaced therebetween, to allow the air separation module to be supported by the canister and the band. In certain examples the band and the canister are formed as a one-piece canister body, the band thereby providing strength to the canister to limit (or eliminate entirely) the need for an external frame or support. In accordance with certain examples the band can be welded or bonded to the canister to provide strength to the canister. In accordance with certain examples the band couples a canister fixation feature to support the air separation module to a vehicle carrying the air separation module. It is also contemplated that the band can support a supply conduit through a standoff, conforming the air separation module the arrangement of a fuel system carried by the vehicle.

The term "about" is intended to include the degree of error associated with measurement of the particular quantity based upon the equipment available at the time of filing the application.

The terminology used herein is for the purpose of describing particular examples only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary example or examples, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular example disclosed as the best mode contemplated for carrying out this present disclosure, but that the present disclosure will include all examples falling within the scope of the claims.

## Claims

1. An air separation module, comprising:
a canister (126) having an inlet end (130), an axially opposite outlet end (132), and an oxygen-enriched air flow fraction outlet port between the inlet end and the outlet end of the canister;
a separator (122) supported within the canister and configured to separate a compressed air flow into an oxygen-depleted air flow fraction and an oxygen-enriched air flow fraction, provide the oxygen-depleted air flow fraction to the outlet end of the canister, and divert the oxygen-enriched air flow fraction to the oxygen-enriched air flow fraction outlet port; and
a band (128) fixed to the canister and extending about the separator at a location axially between the oxygen-enriched air flow fraction outlet port and the inlet end of the canister to support the air separation module.

2. The air separation module of claim 1, wherein the band and the canister are formed as a one-piece canister body, or wherein the band is fastened to the canister, or wherein the band is welded or bonded to the canister.

3. The air separation module of any preceding claim, wherein the canister has a canister inlet flange and an axially opposite canister outlet flange, wherein the band is evenly spaced between the canister inlet flange and the canister outlet flange.

4. The air separation module of any preceding claim, further comprising a supply conduit fluidly coupled to the outlet end of the canister, wherein the supply conduit is supported by the canister.

5. The air separation module of claim 4, wherein the band includes a standoff, wherein the supply conduit is supported by the standoff.

6. The air separation module of claim 4, further comprising a band member extending about the canister axially between the oxygen-enriched air flow fraction outlet port and the band, wherein the band member supports the supply conduit.

7. The air separation module of any preceding claim further comprising a canister fixation feature connected to the band and arranged for fixation of the air separation module to a vehicle structure.

8. The air separation module of claim 7, further comprising a one-piece inlet cap connected to the inlet end of the canister and having an inlet end fixation feature, the inlet end fixation feature arranged for fixation of the air separation module to a vehicle, or further comprising a one-piece outlet cap connected to the outlet end of the canister and having an outlet end fixation feature, the outlet end fixation feature arranged for fixation of the air separation module to a vehicle.

9. The air separation module of claim 7, wherein the canister fixation feature includes a clevis structure arranged to seat therein a tie rod.

10. The air separation module of any preceding claim, wherein the inlet cap has a one-piece inlet cap body, the one-piece inlet cap body and inlet end fixation feature being homogenous in composition and monolithic in construction.

11. The air separation module of any preceding claim, wherein the outlet cap has a one-piece outlet cap body, the one-piece outlet cap body and inlet end fixation feature being homogenous in composition and monolithic in construction.

12. A nitrogen generation system, comprising:
an air separation module as recited in any preceding claim, wherein the canister has a canister inlet flange and an axially opposite second flange, wherein the band is evenly spaced between the canister inlet flange and the second flange;
a compressed air source fluidly coupled to the inlet end of the canister and fluidly coupled to the outlet end of the canister by the separator; and
a fuel tank fluidly coupled to the outlet end of the canister and fluidly coupled to the inlet end of the canister by the separator.

13. The nitrogen generation system of claim 12, further comprising:
a canister fixation feature fixed to the band and arranged for fixation of the air separation module to a vehicle structure;
a one-piece inlet cap connected fixed to the inlet end of the canister and having an inlet end fixation feature, the inlet end fixation feature arranged for fixation of the air separation module to a vehicle structure; and
a one-piece outlet cap connected fixed to the outlet end of the canister and having an outlet end fixation feature, the outlet end fixation feature arranged for fixation of the air separation module to a vehicle structure, or wherein the band and the canister are formed as a one-piece canister body, and further comprising a canister fixation feature fixed to the band and arranged for fixation of the air separation module to a vehicle structure.

14. A method of making an air separation module, comprising:
defining a canister having an inlet end, an axially opposite outlet end, and an oxygen-enriched air flow fraction outlet port between the inlet end and the outlet end of the canister;
supporting a separator within the canister to separate a compressed air flow into the oxygen-depleted air flow fraction and the oxygen-enriched air flow fraction, provide the oxygen-depleted air flow fraction to the outlet end of the canister, and divert the oxygen-enriched air flow fraction to the oxygen-enriched air flow fraction outlet port; and
fixing a band to the canister, wherein the band extends about the canister at a location axially between the oxygen-enriched air flow fraction outlet port and the outlet end of the canister to strengthen the canister and support the air separation module.

15. The method of claim 14, further comprising:
connecting a one-piece inlet cap to the inlet end of the canister, the one-piece inlet cap having an inlet end fixation feature for fixation of the air separation module to a vehicle structure;
connecting a one-piece outlet cap to the outlet end of the canister, the one-piece outlet cap having an outlet end fixation feature for fixation of the air separation module to a vehicle structure; and
connecting a canister fixation feature to a band, the canister fixation feature arranged for fixation of the air separation module to a vehicle structure, further comprising:
connecting a standoff to the band;
supporting a supply conduit with the standoff; and
fluidly connecting the supply conduit to the oxygen-depleted air outlet of the canister.
